Europäisches Patentamt

(19) European Patent Office

Office européen des brevets

(11) EP 0 843 463 A2

(12) EUROPEAN PATENT APPLICATION

(43) Date of publication:
20.05.1998 Bulletin 1998/21

(51) Int. Cl.$^6$: H04N 1/60

(21) Application number: 97120031.6

(22) Date of filing: 14.11.1997

(84) Designated Contracting States:
AT BE CH DE DK ES FI FR GB GR IE IT LI LU MC
NL PT SE
Designated Extension States:
AL LT LV MK RO SI

(30) Priority: 15.11.1996 JP 304883/96
16.12.1996 JP 335938/96

(71) Applicant:
FUJI PHOTO FILM CO., LTD.
Kanagawa (JP)

(72) Inventor: Usami, Yoshinori
Ashigarakami-gun, Kanagawa-ken 258 (JP)

(74) Representative:
Klunker . Schmitt-Nilson . Hirsch
Winzererstrasse 106
80797 München (DE)

(54) Color reproduction data converting method

(57) The improved color reproduction data converting method of the present invention comprises the steps of obtaining color matching ink amounts of CMY colors being metamer with the colorimetric data as to a plurality of different amounts of K plate; obtaining an achromatic amount from a total ink amount of CMYK in each amount of the K plate; obtaining an achromatic amount function for the amount of the K plate in linear portion; generating a mapping function from the colorimetric data and the achromatic amount to the ink amounts of CMYK in the linear portion and obtaining a weighting coefficient for reflecting to the achromatic amount with the K plate control condition previously selected; determining the achromatic amount from the colorimetric data; and calculating ink amounts of CMYK from the achromatic amount and the colorimetric data with the use of the mapping function of the CMYK ink amount. As a result, the invention method can obtain the reproducible four-dimensional color reproduction data in the actual printing from the three-dimensional colorimetric data while maintaining metamerism under the K plate generating condition set up arbitrarily by user.

EP 0 843 463 A2

**Description**

BACKGROUND OF THE INVENTION

The present invention relates to a method of converting color reproduction data, more particularly to a method of automatically converting three-dimensional data representing colorimetric appearance into C (cyan) M (magenta), Y (yellow), K (black) color reproduction data containing data of K (a black ink) plate such as printing or color printer while holding color matching condition under arbitrary condition of K plate, and in this case, a method of determining arbitrary amount of K plate automatically.

Generally, a printing is represented by an area modulating of a halftone percentage of CMYK. As to a conversion of arbitrary color reproduction data (for example, R (red), G (green), B (blue)) into color reproduction data of four colors or more including the K plate having the special characteristic of print, conversion conditions such as the separation curve or the LUT (look up table) with the utilization of experiential method are determined by a user according to some purposes. In this respect, the feature of deciding the arbitrary K plate generating condition while holding colorimetric color reproduction information before conversion then becomes work to be accompanied by great difficulty. Generally, mapping relation from CMYK to three-dimensional space such as the colorimetric space of RGB or Lab and XYZ is not a mapping of one to one, so that inverse mapping from the three-dimensional space into CMYK four-dimensional may not be obtained uniquely and easily.

As this solution method, there is proposed a method of treating the mapping as a mapping of CMY to three-dimensional space after restricting the K plate under a kind of condition. As specified example, a method of solving Neugebauer equation with successive approximation due to partial differentiation in 3-4 conversion while using the K plate as a constant, as shown in Japanese Patent Application Opened No. 175,452/91 and a method of achieving 3-3 conversion with specified K plate condition by performing a print containing the K plate previously determined and performing colorimetry of this printed matter (a chart), as shown in Japanese Patent Application Opened No. 158,071/91, are proposed.

In these conventional methods, the former method can be performed only in 3-4 conversion (CMYK generation) under the specfied K plate amount condition. The latter method can calculate 3-4 conversion suspectably as a limited solution in the previously limited K plate condition (substituted and added amounts by K plate), but 3-4 conversion must be repeated at all from the first every time its conditions are changed, and thus the output and the measurement of a similar chart are necessary, so that the user does not have at all the degree of freedom for deciding arbitrary K plate condition and achieving 3-4 conversion on that condition. In case of selecting the K plate amount, it is furthermore difficult to set a condition while being conscious of a virtual restriction as a print (such as maximum ink amount). That is, the restrictive condition of the K plate in concern is not mentioned or its condition is fixed or considered being fixed.

By the way, in the printing field, a user demands arbitrary CMYK generation as a print condition every image for the following print purposes at least. In printing, it is considered being better to reflect the general print purpose of the following typical K plate generation as a condition to decide the K plate amount.

1) The portion that CMY inks are printed with the fixed and same amount is considered being gray and this portion is substituted for the K plate to be considered as colorimetric reproducible equivalent, thereby securing stability and precision of color reproduction mainly on gray (so-called achromatic plate-making is realized).
2) The total ink amount is reduced, the balance distribution is considered, and thus stabilization of printing is schemed.
3) Maximum density realized by three colors of CMY is increased furthermore and the range of maximum density is explained.

However, the setting up every picture of the K plate condition that is considered about these conditions requires the long experience and the skill technique, so that there was the problem chat setting up of the K plate condition at random is still more difficult while considering colorimetric reproduction, and while again, as mentioned above, being conscious of restriction in a fact as a print.

Moreover, the quantitative methods setting up every picture the K plate condition which is considered about the above-described conditions are not still established, so that there was a problem to be very difficult work in the present situation.

SUMMARY OF THE INVENTION

It is an object of the present invention to eliminate the above conventional technical problems, and to provide a color reproduction data converting method capable of setting up the K plate generation condition in the above printing purpose at random by user, of converting three-dimensional data such as colorimetric value into four color separation data CMYK, while holding colorimetric reproduction condition of original three-dimensional colorimetric data without such K plate generation condition, and of obtaining reproducible four-dimensional color reproduction data with printing suitability and separated by four colors by taking a nonlinear characteristic technique to print into consideration at that time,

Another object of the present invention is to provide a color reproduction data conversion method capable of establishing K plate condition optionally by user while maintaining colorimetric reproduction condition, and of selecting a parameter most suitable for every image in order to decide the K plate condition, and particularly of automatically setting up K plate generating condition without an empirical skill of a user with real print fitness and stability about objected image, in case of converting three-dimensional data such as colorimetric value into four color separation data CMYK of print while maintaining colorimetric color matching under the arbitrary selected K plate generating condition, and of obtaining four-dimensional color reproduction data separated from four colors most suitable for the four-colored print.

In order to achieve the above object, in a first embodiment of the invention, there is provided a color reproduction data converting method of converting three-dimensional colorimetric data into four-dimensional color reproduction data containing a black plate of C (cyan), M (magenta), Y (yellow) and K (black) while keeping a metamerism comprising the steps of:

performing an inverse conversion from a three-dimensional colorimetric space to a three-dimensional CMY color space as to a plurality of different amounts of a K plate to obtain color matching ink amounts ink amounts of CMY colors being metamer with the three-dimensional colorimetric data in case of an amount of the K plate being a reference amount as to the plurality of the different amounts of the K plate;

obtaining a ratio between total ink amount of CMYK in each amount of the K plate and total ink amount of CMYK in case of the amount of the K plate being the reference amount as an achromatic amount in each amount of the K plate;

obtaining an achromatic amount function for said amount of the K plate in linear portion by examining a portion being non-linear in which said achromatic amount becomes non-linear for the amount of the K plate;

generating a mapping function from the three-dimensional colorimetric data and the achromatic amount to the ink amounts of CMYK in the linear portion and obtaining a K plate control condition as a weighting coefficient for reflecting the K plate control condition to the achromatic amount successively in order to perform a weighting to the achromatic amount with said K plate control condition previously selected ;

determining the achromatic amount from the achromatic amount function and the selected K plate control condition as a restraint condition for the inverse conversion from the three-dimensional colorimetric data to the four-dimensional color reproduction data; and

calculating ink amounts of CMYK from the thus determined achromatic amount and the three-dimensional colorimetric data with the use of said mapping function of the CMYK ink amount.

Preferably, said K plate control condition includes at least a K plate substitution amount, a maximum K plate limitation, a chroma weight and a brightness weight.

Preferably, said inverse conversion from the three-dimensional colorimetric space to the three-dimensional CMY color space as to the plurality of the different amounts of the K plate is performed based on a forward conversion from a four-dimensional CMYK color space to the three-dimensional colorimetric space obtained with interpolation calculating by making colorimetry with specified color patches.

Preferably, at least one of the CMYK ink amount mapping function and an achromatic amount limitation in the achromatic amount function performs a K plate generation by scoring as a profile of K plate generation amount previously, and by making successive calling.

Preferably, when a point of a color gamut outside of a print requires for calculation of the ink amount of CMYK, the K plate outside the color gamut is estimated with maximum likelihood by using a parameter of the same dimension as the restraint condition used as calculation of said a chromatic amount in such a way that the K plate outside the color gamut becomes continued from the K place inside the color gamut, and then, if the thus assumed K plate is no less than 0 % and no more than 100 %, CMY ink amounts outside the color gamut are obtained by obtaining the color matching ink amounts in the assumed K plate, and if the assumed K plate is less than 0 % and more than 100 %, CMY ink imaginary amounts outside the color gamut continuing from inside the color gamut are estimated from a recurrence formula in a specified division space.

In a second embodiment of the invention, there is provided a color reproduction data converting method of converting three-dimensional colorimetric data into four-dimensional color reproduction data containing a black plate of C (cyan), M (magenta), Y (yellow) and K (black) while keeping metamerism comprising steps of:

setting up a restraint condition to a K plate, and

obtaining mapping of three-dimensional color reproduction data of CMY from the three-dimensional colorimetric data by using a forward normal lattice mapping function of three-dimensional colorimetric data from the four-dimen-

EP 0 843 463 A2

sional color reproduction data of CMYK by the successive approximation or error minimization;

wherein a K plate control amount is included as a parameter reflected to said restraint condition of the K plate, and said K plate control amount is established in the most suitable value demanded by an experiment previously under print stability for image analytical data; and

wherein said K plate control amount contains a K plate substitution amount and a K plate amount of maximum limitation at least, and image analytical data contains gray histogram at least.

Preferably, said K plate control amount includes further at least one of chroma weight and a brightness weight.

Preferably, said image analytical data includes a basic ink gross count of CMY, a maximum brightness and a minimum brightness.

Preferably, said forward normal lattice mapping function is obtained by subjecting specified color patches to colorimetry and by making forward conversion obtained with interpolation calculating from four-dimensional CMYK color space to three-dimensional color metric space.

Preferably, said K place restraint condition is a K plate substitution ratio at each amount of the K plate which is defined as a ratio between a total amount of CMYK in each amount of the K plate and a total amount or CMKY in case of the amount of the K plate being the reference amount, and therein said K plate substitution ratio at each amount of the K plate is obtained by making inverse conversion from a three-dimensional colorimetric space to a three-dimensional CMY color space as to a plurality of different amounts of the K plate including the reference amount with the use of the forward normal lattice mapping function to obtain ink amounts of CMY colors being metamer with the three-dimensional colorimetric data increase of the amount of the K plate being the reference amount as to the plurality of the different amounts of the K plate, thereby obtaining the ratio between the total amounts of CMKY in each amount of the K plate thus obtained and in case of the amount of the K plate being the reference amount.

Preferably, said K plate substitution ratio is defined as the K plate substitution ratio function being a variable of the amount of the K plate in a effective reproduction area, and said K plate control amount is obtained as a weighting coefficient reflected to successive K plate substitution ratio in order to perform a weighting to the K plate substitution ratio, and

said setting of the K plate restraint condition is subjected in such a way that the most suitable K plate control amount is obtained as a parameter reflected to the K plate restraint condition for the image analytical data obtained from the three-dimensional colorimetric data, the K plate substitution ratio is weighted as the weighting coefficient with the most suitable K plate control amount thus obtained, and the K plate substitution ratio is decided from the thus set K plate control amount and the K plate substitution ratio function, and

finally the ink amounts of CMYK are calculated as the four-dimensional color reproduction data.

BRIEF DESCRIPTION OF THE DRAWINGS

Fig. 1 is a flow chart showing one embodiment of color reproduction data conversion method according to the present invention;

Fig. 2 is a flow chart showing one embodiment of calculation step of achromatic quantity in the color reproduction data conversion method of the present invention;

Fig. 3A is a graph for showing an example of a relation (of a linear component) between K plate amount obtained in equivalent ink amount calculating step and CMY ink amount, in the color reproduction data conversion method according to the present invention;

Fig. 3B is a graph for showing an example of a relation of a linear component between K plate amount obtaining in achromatic amount calculating step and achromatic amount, in the color reproduction data conversion method according to the present invention;

Fig. 4A is a graph for showing another example of a relation (including a nonlinear component) between K plate amount obtained in equivalent ink amount calculating step and CMY ink amount, in the color reproduction data conversion method according to the present invention;

Fig. 4B is a graph for showing another example of a relation (including a nonlinear component) between K place amount obtained in achromatic amount calculating step and achromatic amount, in the color reproduction data conversion method according to the present invention;

Figs. 5A through 5D show the K plate control conditions in color reproduction data conversion method of the present invention, wherein Fig. 5A shows on example of K plate substitution strength, Fig. 5B shows one example of chroma weight, Fig. 5C shows one example of a maximum limit of the K plate amount, and Fig. 5D shows one example of brightness weight;

Fig. 6 is a graph showing one example of the chroma weight function used for the color reproduction data conversion method of the present invention.

4

Fig. 7 is a diagram showing color reproduction gamut in the L*a*b* space by different K plate amount;

Fig. 8 is a graph showing the K plate amount equal to CMY equivalent removal amount;

Fig. 9 is a flow-chart showing one example of a color reproduction data converting method according to the present invention;

Figs. 10A, 10B, 10C and 10D are graphs showing fluctuations of the color difference ΔE for the K plate substitution ratio and gray component histogram as to gray element and pure color element in case of changing the K plate substitution strength by chroma in the color reproduction data conversion method according to the present invention, respectively;

Figs. 11A, 11B, 11C, and 11D are graphs showing fluctuations of the color difference ΔE for the K plate substitution ratio and gray component histogram as to gray element and pure color element in case of changing K plate substitution strength by brightness distribution in the color reproduction data conversion method according to the present invention, respectively;

Fig. 12 is a graph showing one example of a chroma weight function used in the color reproduction data conversion method according to the present invention.

## DETAILED DESCRIPTION OF THE INVENTION

A color reproduction data conversion method according to the present invention is further described in detail with reference to the accompanying drawings.

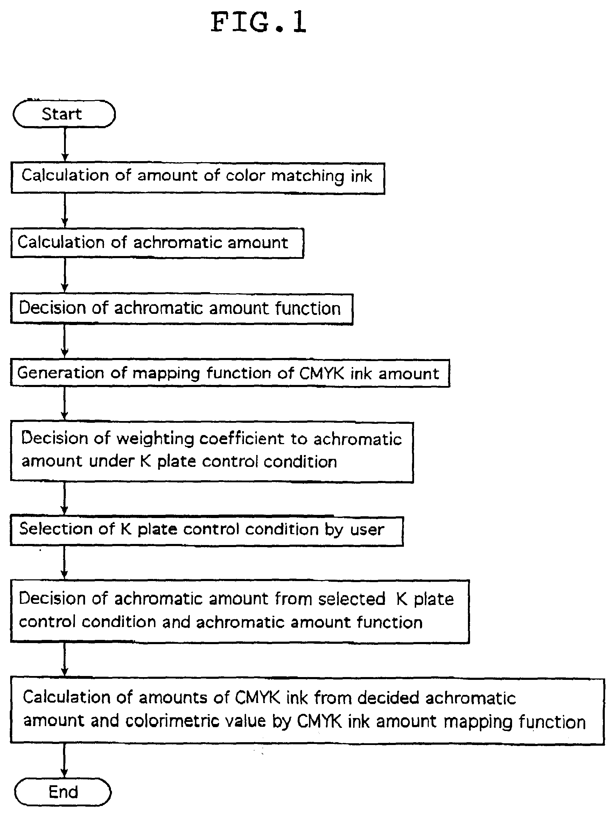

First, one embodiment of a color reproduction data conversion method according to the present invention is further described in detail with reference to Figs. 1 to 8.

The present invention uses the achromatic amount based on an ink amount of the print color space as a constraint condition for performing reverse conversion from three-dimensional data to four-dimensional data with the color matching condition, and reflects the K plate condition which user may select at random, to the chromatic amount in order to generate a K plate, in case of converting three-dimensional colorimetric data into four-dimensional color reproduction data of C (Cyan) M, (Magneta), Y (yellow) and K (Black) inherent to the print, thereby enabling the selection of the K plate amount at random and generating colorimetric color matching CMYK color reproducing data. Because it is indispensable to be able to decide the K plate condition at random while maintaining the colorimetric reproduction condition, in order to achieve the above mentioned print purpose.

That is, generally the printing is done in four colors of CMYK, so that it is not in mapping relation of one to one to the colorimetric space data such as a CIEXYZ and Lab represented in three-dimension and, for example, most of mappings of several CMYK values show the same colorimetric values (CIE Lab or the like), and are not orthogonalized. In this respect, it is not easy to obtain a close solution of mapping from data in arbitrary three-dimensional space to four-dimensional space, and some restraint condition is necessary in order to obtain the mapping.

According to the present invention, a user selects the K plate condition as a restraint condition voluntarily under a physical limit such as an ink amount in real print color space, and the mapping from three-dimensional color space to four-dimensional color space is obtained in a restraint condition of mapping from three-dimensional color space to four-dimensional color space.

As shown in Fig. 1, as achromatic amount decision method, first, in the first step of the present invention, the color matching ink amount in each K plate amount in ink amount space is calculated, and as the second step of the present invention, the general ink count is obtained in each K plate amount, and further, K plate substitution ratio (achromatic amount) is obtained from the general ink amount ratio to be different by the K plate amount even in color matching.

Hereinafter, the process characterized by the first embodiment of the present invention is described in detail based on the flow-chart of the method according to the present invention shown in figure 1.

The most characterized portion of the present invention is to utilize the following achromatic amount as a restraint condition in order to realize the inverse mapping from three-dimensional colorimetric space to a four-dimensional device space of CMYK.

Herein, the color matching ink amount is defined as an ink amount of CMY that is color matched with three-dimensional colorimetric data (for example, XYZ value) when the K plate amount is a reference amount, for example, 0 %.

This color matching ink amount can be obtained by performing 3-3 reverse conversion from three-dimensional colorimetric space to the three-dimensional color reproduction system of CMY for the discrete K plate amount by using the forward directional conversion data from color reproduction system of 4 color of CMYK (four-dimensional device space) to the three-dimensional colorimetric space (for example, XYZ). The 3-3 reverse conversion method necessary to obtain this color matching ink amount is not particularly limitative, if inverse conversion from three-dimensional colorimetric space to three-dimensional color reproduction space is possible, but can use well known 3-3 inverse conversion method. Preferably, the color conversion method described in Japanese Patent Application Opened No. 156555/95 belonging to the Assignee of the present application and the like can be used.

A method of obtaining forward direction conversion data from systems for reproducing with four color of CMYK such as printing or the like to colorimetric space, forming the basis of 3-3 inverse conversion, and forward direction normal lattice mapping function (LUT; look up table) for performing the forward direction conversion used therefor are not limitative in particular, and a method for performing well-known forward direction conversion can be used. In other words, the forward dissection conversion data and forward direction normal lattice mapping function may be obtained by well-known methods, for example the method in which color patch or the like printed with the specified halftone dot percent (%) is subjected to colorimetry, interpolated and calculated.

By the way, the three-dimensional colorimetric data according to the present invention is not limitative in particular, if it is three-dimensional colorimetric data expressed with the colorimetric space of CIEXYZ and CIE Lab color system or the like, that is, any three-dimensional color space data can be used if it is a three-dimensional color space data capable of being converted into three-dimensional colorimetric data such as an XYZ and Lab unequivocally. For example, it may be Luv, YIQ, YCC, HSI and RGB of three-dimensional color reproduction data. Also, four-dimensional color reproduction data in the present invention may preferably be data of the four-colored ink amount of CMYK containing a black (K) plate.

Next, as shown in Fig. 1, in the third step of the present invention, a nonlinear portion in print (a portion with a problem in print reproduction) is examined from the achromatic amount obtained in the second step, and a relation between the K plate amount and achromatic amount in the linear portion is made the mathematical function, thereby obtaining a function of the achromatic amount.

Further, as shown in Fig. 1, in the fourth step of the present invention, mapping functions from colorimetric data and achromatic amount to ink amount of CMYK is generated only in the linear portion of achromatic amount function.

Then, as shown in Fig. 1, in the fifth step of the present invention, in order to be able to select the K plate amount voluntarily or freely, a weighted function where the selecting condition for the K plate control shown against user is successively reflected on this achromatic amount as a weight coefficient is obtained. In this respect, selection condition for the K plate control indicated to a user may preferably be at least K plate substitution amount, K plate maximum limit amount, chroma weight and brightness weight.

In the present invention, the above-mentioned steps are performed beforehand, to previously obtain achromatic amount function, weight coefficient to the achromatic amount by the K plate control condition of a user and CMYK ink amount mapping function.

Then, as shown in Fig. 1, in the sixth step of the present invention, as a restraint condition for 3-4 inverse conversion from three-dimensional color space (colorimetry data) to four-dimensional color space (CMYK color reproduction data), the final achromatic amount is determined from the achromatic amount function described only the linear portion and the weight coefficient due to the K plate control condition selected by the user voluntarily.

As shown in Fig. 1, in the seventh step of the present invention, the ink amount of CMYK is finally obtained using the mapping function from three-dimensional colorimetric data and the latest achromatic amount thus decided, to CMYK ink amount.

Herein, the important matter is that the ink amount of CMYK to be obtained is in Gamut (the color reproduction gamut of print). That is, the process of this step is handled in gamut (the color gamut of print) to the last.

In this respect, the achromatic amount function (achromatic amount limit) and the mapping functions from achromatic amount to CMYK ink amount are stored as a profile, and called serially, thereby making K plate generation possible quickly.

In this way, in gamut, CMYK ink amount (four-dimensional color reproduction data) can be obtained from arbitrary three-dimensional colorimetric data with the printable K plate condition selected by user voluntarily.

While, in case of obtaining the mapping from arbitrary colorimetric value (three-dimensional colorimetric data) to CMYK ink amount, interpolation and the operation are used, even if CMYK ink amount to be obtained is existent in gamut, that is, in ink amount space, interpolation and operation for obtaining the mapping from arbitrary colorimetric value require points outside gamut, that is, points outside ink amount space, too. In other words, in the present invention, there is the case that the treating outside gamut becomes necessary.

First, in the process outside gamut, K plate outside gamut is estimated with maximum likelihood by using parameters of the same dimension as various restraint conditions (such as a chroma, brightness or the like) function utilized to obtain the above achromatic amount in such a manner that K plate outside gamut becomes continued from the K plate inside gamut. Next, if the dot percent of the K plate is 0 % or more and 100 % or less, color matching ink amount in the K plate can be obtained, thereby obtaining CMY ink amount outside gamut.

Furthermore, when the dot of the K plate is less than 0 % and more than 100 %, CMYs ink imaginary amount outside gamut continuing from inside gamut is estimated with maximum likelihood from the recurrence formula in specified division space.

In this way, according to the method of the present invention, even if the user selects the K plate condition voluntarily, the selected K plate condition is the printable condition, so that arbitrary three-dimensional colorimetric data can be converted into CMYK color reproduction data under this K plate condition.

Hereinafter, respective steps of the color reproduction data conversion method of the present invention are concretely described with reference to attached drawings.

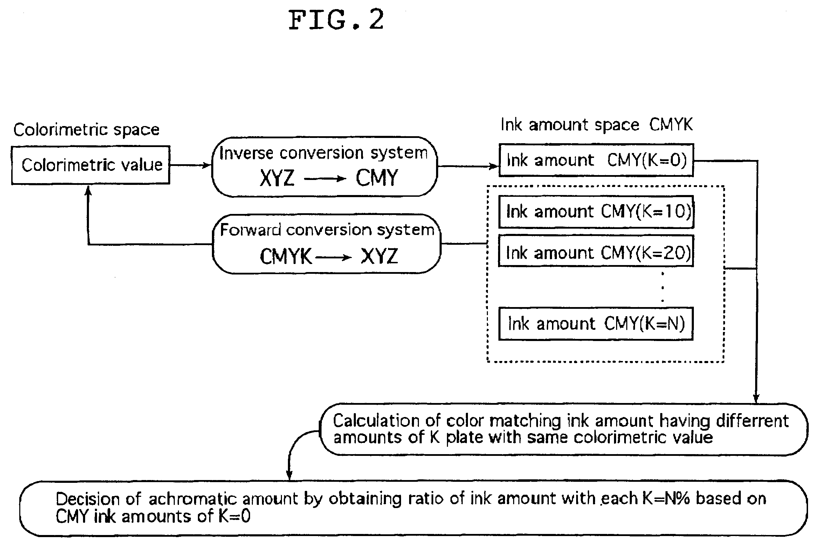

Figure 2 shows one embodiment of a flow chart for calculating the achromatic amount being characterized by the present invention.

At first, as shown in Fig. 2, as a premise for performing first color matching ink amount calculation step of the present invention, a color prediction function and a Look up table (hereinafter referred to as LUT) for performing forward direction conversion from CMYK color reproduction data to colorimetric data, must be formed.

That is, in a system of reproducing with four colors of CMYK of print or the like, correlation with the color gamut which can be reproduced using four colors can be obtained beforehand as color prediction function and LUT by making colorimetry and interpolating color patches or the like printed with specified halftone dot %. For the sake of convenience, this correlation function is made four dimensional LUT of CMYK in a fraction of 10 %. For example, after printing and making colorimetry the chart such as ANSI-IT8.7/3 with this correlation function, LUT can be formed by using polynominal approximation and volume interpolations The colorimetric data is designated with CIEXYZ color system here.

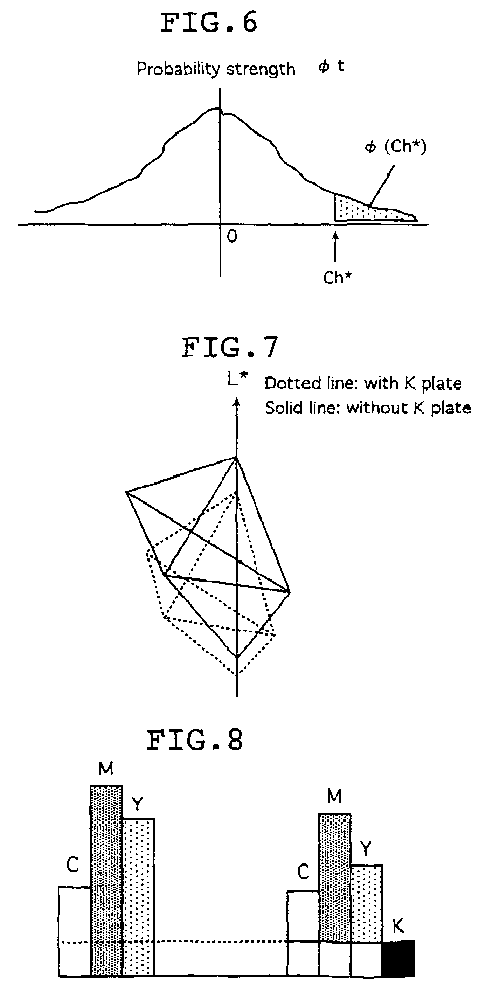

By the way, a method of utilizing this LUT to generate CMYK from XYZ by 3-4 inverse conversion is considered mathematically. In other words, as shown in the following equation (1), successive increments of CMYK for XYZ partial differentiation are obtained by generalized matrix, so that the root can be obtained by using Newton methods. However, color gamut by practical CMYK is not independent for variation of K plate, as shown in Fig. 7 (is expressed in Lab space), so that the portions overlapped in the same color space is present even if K plate is different, and thus, it is impossible to directly obtain the close solution of CMYK from XYZ mathematically.

The inverse matrix solution by 3 X 4 matrix with generalized equation is shown in the following.

$$\begin{bmatrix} \Delta X \\ \Delta Y \\ \Delta Z \end{bmatrix} = A \begin{bmatrix} \Delta C \\ \Delta M \\ \Delta Y \\ \Delta K \end{bmatrix}$$

but,

$$A = \begin{bmatrix} \partial X/\partial C & \partial X/\partial M & \partial X/\partial Y & \partial X/\partial K \\ \partial Y/\partial C & \partial Y/\partial M & \partial Y/\partial Y & \partial Y/\partial K \\ \partial Z/\partial C & \partial Z/\partial M & \partial Z/\partial Y & \partial Z/\partial K \end{bmatrix}$$

Here, if inverse conversion is performed mathematically, the following equation can be obtained.

$$\begin{bmatrix} \Delta C \\ \Delta M \\ \Delta Y \\ \Delta K \end{bmatrix} = A^{+} \begin{bmatrix} \Delta X \\ \Delta Y \\ \Delta Z \end{bmatrix} \qquad \text{Equation (1)}$$

wherein,

$$A^{+} = (A^{t} A)^{-1} A^{t}$$

Then, it is considered that under the K plate restraint condition in which the K plate is restricted in some form, mapping from three-dimensional colorimetric value to CMY three-dimensional color reproduction data is resolved by returning to the successive approximation and error maximum likelihood problem. The present invention is attained by selecting K plate substitution ratio (achromatic amount) and K plate strength from CMYK voluntarily by user, thereby attaining conversion from colorimetric value at arbitrarily selective and printable K plate condition to CMYK color reproduction value, by utilizing a linear region of K to CMY ink amount ratio or achromatic ration to follow it, in case of deciding restraint condition from the selection result. That is, in the present invention, calculations are performed only in the part that linearity in the physics amount space speaking for practical printability (achromatic amount) is guaranteed, and arbitrary K plate is decided by giving the smooth variable amount, so that increasing or decreasing of the smooth K plate amount which is not contradicted more with print reproduction characteristic, can be achieved. That is, reproducible conversion can performed in the practical printing.

Here, the achromatic amount characterized by the present invention is easily obtained by the following method, for example. Here again, colorimetric value is expressed in CIEXYZ color system.

That is, as shown in Fig. 2, CMY ink amount which is the same condition as XYZ value in K =0 (hereinafter, referred to as a color matching ink amount),is obtained for $0 < K \leqq 100$, thereby calculating the ratio. That is, first, as the first step of the present invention, by using LUT obtained by using forward conversion from the above described CMYK to XYZ, color matching ink amount in case of making K plate amount certain value can be calculated with 3-3 inverse conversion.

In this embodiment, as described above, mapping relation from CMYK to XYZ is maintained at LUT of CMYK operated every 10 %, so that variable amount of K plate may also be calculated with discrete change every 10% operation. Concretely, CMY may be reversely calculated from the LUT when operation is fixed by K =10,20,30,40...100 % successively by using Newton successive approximation or the like shown in following equation 2 (refer to Fig. 2).

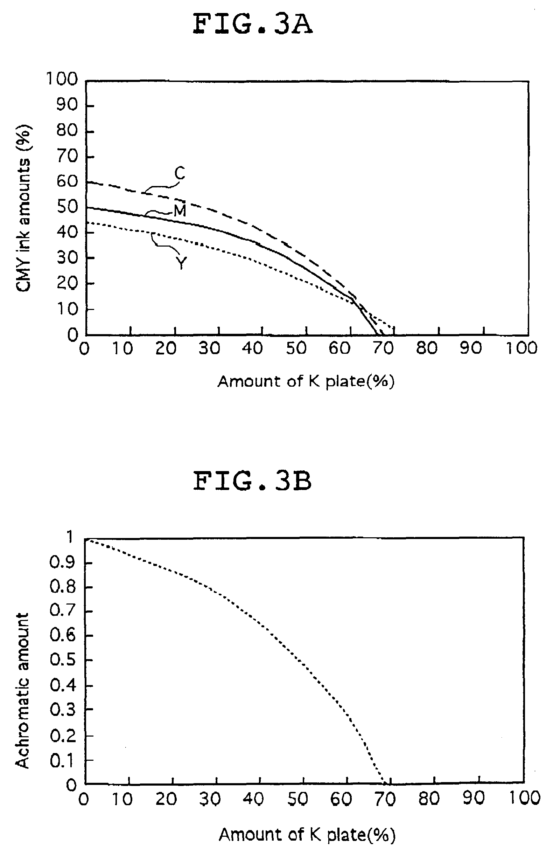

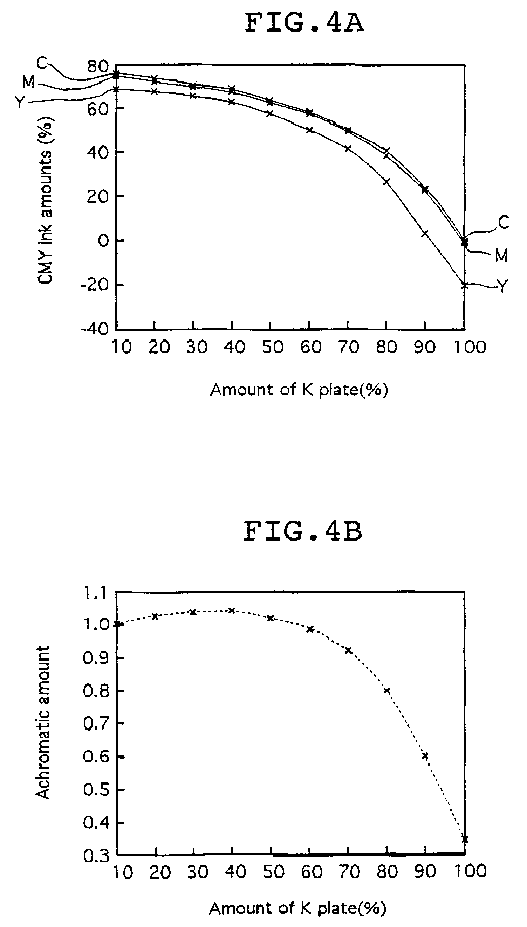

The relations between the CMY color matching ink amount (%) thus obtained and the K plate amount (%) are shown in Fig. 3A and Fig. 4A.

The successive approximation solution method by Newton method is shown in the following.

$$\begin{bmatrix} X_i \\ Y_i \\ Z_i \end{bmatrix} = \begin{bmatrix} \partial X/\partial C & \partial X/\partial M & \partial X/\partial Y \\ \partial Y/\partial C & \partial Y/\partial M & \partial Y/\partial Y \\ \partial Z/\partial C & \partial Z/\partial M & \partial Z/\partial Y \end{bmatrix} \begin{bmatrix} \Delta C \\ \Delta M \\ \Delta Y \end{bmatrix} + \begin{bmatrix} X_0 \\ Y_0 \\ Z_0 \end{bmatrix}$$

Wherein $X_0$, $Y_0$, $Z_0$ are initial values, $X_i$, $Y_i$, $Z_i$ are values corresponding to CMY to be obtained. And when following equation is provided,

$$J = \begin{bmatrix} \partial X/\partial C & \partial X/\partial M & \partial X/\partial Y \\ \partial Y/\partial C & \partial Y/\partial M & \partial Y/\partial Y \\ \partial Z/\partial C & \partial Z/\partial M & \partial Z/\partial Y \end{bmatrix}, \begin{bmatrix} \Delta C \\ \Delta M \\ \Delta Y \end{bmatrix} = \begin{bmatrix} C-C_0 \\ M-M_0 \\ Y-Y_0 \end{bmatrix}$$

the above equation is designated as follows.

$$\begin{bmatrix} X_i \\ Y_i \\ Z_i \end{bmatrix} = J \begin{bmatrix} C-C_0 \\ M-M_0 \\ Y-Y_0 \end{bmatrix} + \begin{bmatrix} X_0 \\ Y_0 \\ Z_0 \end{bmatrix}$$

Therefore, CMY becomes as following equation (2).

$$\begin{bmatrix} C \\ M \\ Y \end{bmatrix} = \begin{bmatrix} C_0 \\ M_0 \\ Y_0 \end{bmatrix} - J^{-1} \begin{bmatrix} X_0 \\ Y_0 \\ Z_0 \end{bmatrix} + J^{-1} \begin{bmatrix} X_i \\ Y_i \\ Z_i \end{bmatrix} \tag{2}$$

And until the following equation is satisfied, the convergence point is searched while substituting in $C_0$, $M_0$, $Y_0$, of the equation (2), CMY calculated from the equation (2) and substituting in $X_0$, $Y_0$, $Z_0$ of the equation (2), XYZ calculated from CMY.

$$\begin{vmatrix} C-C_0 \\ M-M_0 \\ Y-Y_0 \end{vmatrix} \leq \varepsilon$$

From a combination of the color matching ink amount changing respective K plates discretely for colorimetric value or CMY (K =0) thus obtained in the first step, the present invention obtains the ink amount ratio and achromatic amount as a physical amount for describing K plate substitution amount in the second step.

Here, the attention must be paid to the fact that as said in the past, the colorimetric equivalent removal amount of CMY for the K plate substitution amount is not fixed, so that the substitution balance such as CMY equivalent amount = K plate amount generally as shown in Fig. 8 is not formed. Therefore, K plate amount=achromatic amount does not grow. This non-linear relation was described as achromatic theory much at the past, however, the accurate substitution amount which can be practically used in colorimeter can not still be obtained therefrom.

In the present invention, this is obtained discretely and comprehensively from a combination of CMY ink of the above obtained condition color matching, thereby achieving the mapping from XYZ to CMYK for arbitrary K plate amount rate.

For example, when colorimetric values at certain values of $C_0$, $M_0$, $Y_0$ (K =0) are $X_0$, $Y_0$, $Z_0$, color matching ink amount with K = N % is shown with $C_N$, $M_N$, $Y_N$. Accordingly, the substitution ratio at this $C_N$, $M_N$, $Y_N$, $K_N$ can be defined by an equation such as $R = f(C_N, M_N, Y_N, K_N) / f(C_0, M_0, Y_0)$, as an example. Herein, f shows weighted mean and summation function or minimum function, etc.

As described above, the achromatic amount R can be obtained according to the flow shown in Fig. 2.

The relation between the achromatic amount R and the K plate amount (%) thus obtained is shown in Fig. 3B and Fig. 4B. Fig. 3B is obtained from the relation between CMY color matching ink amount (%) and the K plate amount (%) shown in Fig. 3A (neutral gray of intermediate brightness) here, and is one example consisting of only the linear component that has no non-linear portion, in which the K plate substitution rate (achromatic amount (index)) exceeds over 1.0 and is reversed. That is, in the example shown in Figs. 3A and 3B, when K plate amount is increased and its increment is substituted from CMY, the total ink amount is decreased linearly. In other words, even if K plate amount is reduced and total ink amount increases, the ink metastasis amount increases substantial linearlily.

Fig. 4B is obtained from the relation between CMY color matching ink amount (%) and the K plate amount (%) shown in Fig. 4A (a dark color with great brightness), and is one example including the non-linear portion in which the K plate substitution rate R exceeds over 1.0 and is reversed.

By the way, in general, there is an instable portion in the color space that is almost impossible to reproduce in printing, so that the thus obtained achromatic amount shows a non-linear characteristic for increase of K plate amount. For example, as shown in Fig. 4B, in case that the K plate substitution rate (achromatic amount) exceeds 1.0 and is reversed at the time the K plate amount increases, it seems that unpreferable phenomenon occurs in the print characteristics. As shown in Fig. 4B, the increase and decrease of K plate substitution rate is not always linear for K plate amount. That is, in case of an ideal print, substitution amount of CMY ink is to linearly increase with increase of K plate amount. Actually, however, there is the case that when the total ink amount becomes much, the substitution ratio becomes small adversely (more than 1.0) in the case of large K plate amount, under the influence of a trapping and the like. In case of generating K plate, non-linearity on such a real print must be taken into consideration. In other words, it is not guaranteed whether converted result can be reproduced on print justly.

Therefore, in the third step of the present invention, the achromatic amount function (correlation function with achromatic amount and K plate amount) is defined only in linear portion except non-linear portion in which such achromatic amount (K plate substitution rate) does not became linear for K plate amount, that is, reproduction on print is not guaranteed justly. In other words, correlation function between achromatic amount and CMYK amount in the above described color matching ink amount space can be approximated with polynominal or the like, and the non-linear type space must be avoided at that time. Concretely, change of achromatic amount for increase of K plate amount in the above obtained arbitrary colorimetric value is approximated with polynominal, so that when differential inflection point as shown in Fig. 4 exists therein, the testing that the portion of total ink amount larger than that of the inflection portion is omitted from data, may be performed.

Then, in the fourth step of the present invention, as K plate generating profile, the achromatic ink substitution ratio in color matching ink amount space for lattice data of colorimetric space, and mapping function of CMYK ink amount (polynominal), and restraint condition of the effective ranges (a linear range) thereof, and the like are generated. This is preferably used as a profile for K plate generation (restraint condition).

For example, the following polynominal in which K plate amount is approximated with achromatic amount R XYZ with arbitrary colorimetric value as achromatic amount function, can be used.

$$K_{XYZ} = a_1 R_{XYZ}{}^n + a_2 R_{XYZ}{}^{n-1} + a_3 R_{XYZ}{}^{n-2} + ... + a_n R_{XYZ} + a_{n+1} \tag{3}$$

Here, $\partial R_{xyz}/\partial K < 0$.

When the variable amount of K plate is operated every 10 % and changed discretely, K plate amount have only eleven values. Therefore, in considering degree of freedom, maximum value of degree n may be 8. In this case, nine coefficients $a_1$, $a_2$, ... $a_n$, $a_{n+1}$ may be decided, and thus decided nine coefficients $a_1$, $a_2$, ... $a_5$, $a_9$ may be stored as a profile for K plate generation.

In such a way, when mapping function with achromatic amount for colorimetric value at the three-dimensional colorimetric space and CMYK ink amount is approximated as the above mentioned polynominal, only the coefficients required as above, for example, the above-said coefficients $a_1$, $a_2$, ... $a_n$, $a_{n+1}$ for K plate, in addition to the linear range as a profile for K plate generation can be stored, so that the polynominal including degrees can be formed easily and thus CMYK ink amount can be obtained. Of course, CMYK ink amount mapping function is made as LUT and may be stored as a profile for K plate generation. The 3-4 inverse conversion form three-dimensional colorimetric value to CMYK ink amount can be performed by using such a polynominal and LUT.

As the advantage that such a profile is formed, the following points are expected.

At first, achromatic amount obtained can be made in function as a simple polynominal and LUT, so that 3-4 conversion can be performed at an optional condition with successive calling.

Furthermore, anything may be adopted as selection condition, if it is any variable capable of applying as weight to the achromatic amount.

A method of achieving 3-4 inverse conversion under arbitrary K plate generating condition actually selected by a user, by utilizing an above obtains profile for K plate generation is described in detail.

At first, in the fifth step of the present invention, K plate generation restraint condition is formed.

K plate generating condition must be decided in order to perform 3-4 conversion. One characteristic of the present invention is that K plate generation condition can be decided by a user arbitrary. K plate generation restraint condition is decided by selection condition of a user. Its main conditions comprises chroma weight (if it is near to gray, K plate substitution is done powerfully), brightness weight (K plate substitution is performed powerfully, if the total density is big), K plate amount strength (limiter which the greatest K plate amount is selected), substitution strength (the total K plate substitution ratio strength) or the like. However, if the achromatic ink substitution ratio can be reflected finally, any kind of condition may be used well, and can be set up with a general-purpose.

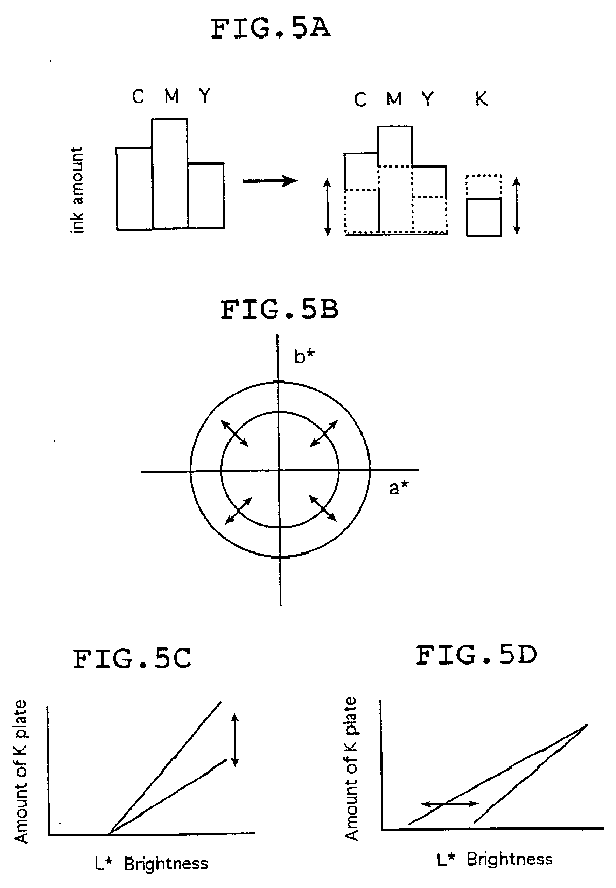

For example, examples of GUIs (Graphic User Interface) of total K plate substitution strength, chroma weight, the maximum amount limit of K plate amount and brightness weight selected as K plate generation restraint condition by a user, is shown in Figs. 5A, 5B, 5C and 5D, but the present invention is not limited thereto.

Fig. 5A shows a change of K plate substitution amount capable of being designated as the K plate substitution strength showing total K plate substitution ratio strength. For example, K plate substitution amount is increased and decreased on CRT by user according to image analytical data, and each ink amount of CMY to be substituted is increased and decreased with predetermined substitution ratio, thereby showing decrease and increase of each ink of residual CMY. Fig. 5B shows a change of the chroma weight designating that nearer to gray the K plate substitution is done more powerfully, wherein in $a^* b^*$ plane ($L^*=0$) of $L^*a^*b^*$ space showing chroma, the portion near the center becomes near to gray (no coloring) and the strength of K plate substitution is decreased and increased when a circle showing the chroma weight performing powerful K plate substitution is placed far and near at its center. Fig. 5C shows the maximum amount limitation of K plate amount, that is, a change of K plate amount strength showing a limiter for deciding the maximum of K plate amount, in which the brightness $L^*$ in $L^*a^*b^*$ space takes on abscissa, the maximum limitation value of K plate amount is increased and decreased when the K plate amount on the most right side of brightness $L^*$ axis where brightness is the most ignorant is increased and decreased, and K plate amount limit value at each brightness is increased and decreased, when the brightest mark of $L^*$ axis most left side is fixed. Fig. 5D shows up to which brightness (brightness) the K plate is introduced, by moving the point where brightness is the most cheerful, from side to side in a figure along $L^*$ axis, and the change of strength of K plate amount at each brightness, in the brightness weight in which the larger the total density is, the more powerfully K plate substitution strength is done.

For example, when the chroma weight is reflected on the achromatic amount, the function to obtain the chroma $Ch^*$ from the colorimetric value XYZ is defined as following expression: $CH^* = LCH (XYZ)$, so that the chroma of the colorimetric value XYZ desired to obtain the inverse mapping of CMY ink amount can be obtained. Moreover, the weight can be added on the achromatic amount in accordance with the chroma weight function (for example regular distribution) as shown in Fig. 6.

By the way, these K plate generation restraint condition is reflected on entirely achromatic ink substitution ratio finally, so that the CMYK ink amount is obtained from data of colorimetric space by using the mapping function defined as K plate generation profile.

Next, the CMYK ink amount is generated in the gamut from achromatic amount by this K plate generation restraint condition.

In the sixth step of the present invention, the weight of the K plate generation restraint condition thus obtained is added to the standardization maximum achromatic amount limited in linear space (is calculated from a profile for K plate generation), so that the final achromatic amount on the user's selection condition can be obtained. For example, in this case, as shown in Fig. 5A, 5B, 5C and 5D, a user uses GUI to reflect the K plate generation restraint condition such as the total K plate substitution strength, the greatest limit of K plate amount, chroma weighting of K plate substitution and brightness weighting, etc. on the achromatic amount.

Then, in the last seventh step of the present invention, the CMYK ink amount under the restraint condition can be obtained from the colorimetric value by using the correlation function of achromatic amount of profile for K plate generation and CMYK ink amount in linear space. Concretely, K plate amount can be restrained at each XYZ from profile for K place generation, by reflecting the set weight coefficient on the profile for K plate generation (a polynomial expression).

In this way, when K plate is fixed, the inverse mapping from colorimetric value XYZ to the CMY color reproduction data (3-3 inverse conversion) can be obtained by using the above described successive approximation methods.

The above inverse mapping can be obtained surely in reproducible color gamut of print, and can not be obtained in outside of the gamut. That is, in the above calculation of ink amount of CMYK, it is not calculated when the inverse mapping is judged to outside of the gamut of the print (in the ink amount space of print, either of CMYK is more than 100 % or less than 0 %), so that the CMYK ink amount can not be generated outside the gamut. However, when the mapping is performed from the CIE colorimetry data to CMYK, there are many cases in which the data outside the gamut are also necessary as auxiliary points in a mathematical prediction of interpolation operation or the like. Naturally, even if the point is a mapping point on imaginary, the geometrical continuity thereof to other points in the gamut must be held.

Therefore, in the present invention, the increment amount of K plate is generated so as to be continuous inside and outside of the gamut in the colorimetric space, and if the discrete amount of K plate is in the range from 0 % to 100 %, the color matching ink amount is obtained in the K plate amount.

That is, in order to continue the increased amount of K plate in outside and inside of the gamut in the colorimetric space, a maximum likelihood equation having a dimension of restraint condition given to achromatic amount (chroma, brightness) is assumed with the data in the gamut, thereby obtaining the K plate amount outside of the gamut. When the K plate is departed from less than 0 % or more than 100 % yet, the color matching ink amount can not be calculated. Therefore, the colorimetric space is divided into arbitrary blocks (in this time, divided in L $*$ axis), the recurrence formula is assumed on the basis of data in this divided space, thereby obtaining continuous virtual CMYK amount.

In this way, the arbitrary K plate weight coefficient is reflected on achromatic amount, so that the K plate amount can be fixed, and a close solution of inverse mapping to CMY space by using successive approximation from the colorimetric value and thus as a result, the inverse conversion from XYZ to CMYK can be performed under the arbitrary K plate condition by the selection of user.

As described in detail, according to the first embodiment of the present invention, by considering stability of color reproduction and security of precision on gray due to the equivalent K plate substitution equivalent to colorimetric color reproduction aimed to print by user, stabilization of print by balance distribution of total ink amount, and expansion of the maximum density range, the K plate condition can be selected voluntarily with three-dimensional colorimetry data while maintaining colorimetric reproduction condition, and the K plate condition to be selected voluntarily with thee-dimensional colorimetry data while maintaining colorimetric reproduction condition, and the K plate condition to be selected can be made a printable K plate condition on the basis of physical amount in achromatic amount in the ink amount space, so that the color reproduction data of four colors of CMYK can be obtained by performing inverse conversion from three-dimensional colorimetric data under the K plate condition capable of printing and having such arbitrary selectivity surely.

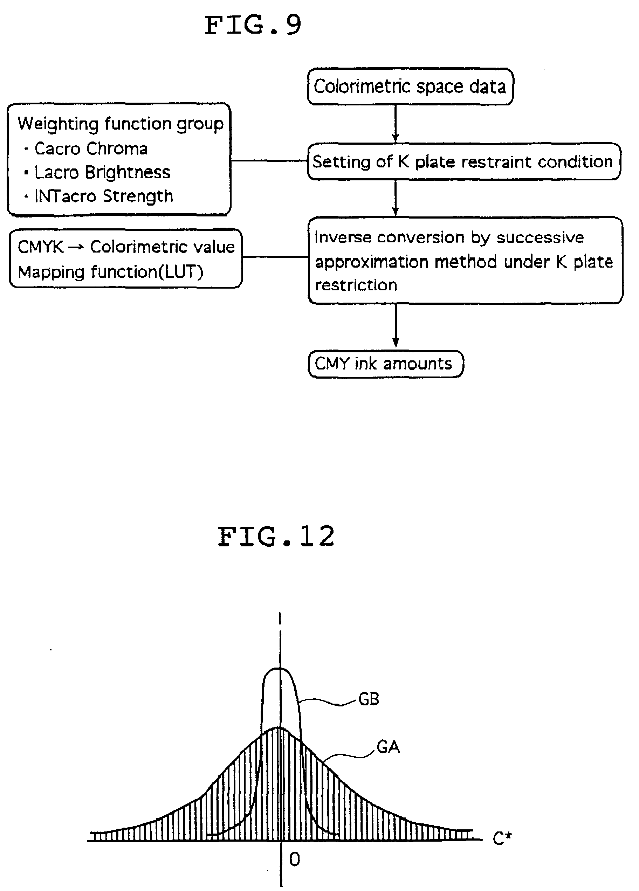

Next, the color reproduction data conversion method of the second embodiment of the present invention is described with reference to Fig. 9 to Fig. 12 in detail.

The second embodiment of the present invention has, at first, an indispensable condition that in case of converting three-dimensional colorimetric data into four-dimensional color reproduction data in print of C (cyan), M (magenta) Y (yellow) and K (black), K plate condition can be decided voluntarily while maintaining colorimetric reproduction condition, in order to generate K plate for attaining previously described printing purpose to attempt stabilization of print, and has at second, another indispensable condition that it is necessary to select a parameter most suitable for every image in order to decide the K plate condition, so that the best K plate generating condition can be established without a user being conscious, by automatically generating the most suitable four-colors (CMYK) balance from infinity of the CMYK balance equivalent to colorimetric color matching in order to suppress the color difference fluctuation in print and locality in the image plane in a respect to a minimum.

That is, a print is attained with four colors of CMYK generally, as a result, it is impossible to obtain a strict solution of the mapping from colorimetric space data such as CIEXYZ and Lab represented with three-dimensional to four-dimensional space, so that some restraint condition is necessary in order to obtain the mapping. According to the present invention, the most suitable K plate restraint condition is established automatically on the basis of stability on the print effected and depended on the image, thereby attaining the mapping conversion from three-dimensional color space to four-dimensional color space.

Fig. 9 shows one embodiment of flow chart enforcing the color reproduction data conversion method of the second embodiment of the present invention.

As shown in Fig. 1, in this embodiment, at first, the K plate restraint condition is established from three-dimensional colorimetric space data. In the following explanation, the present invention describes the above described K plate substitution ratio (a chromatic amount ) as a typical K plate restraint condition, but the present invention is not limited thereto. For example, as the K plate restraint condition, any kind of the condition may be used, even K plate substitution itself and the K plate mixing ratio may be used as long as the K plate amount can be set up finally in the case of conversion into the CMYK color reproduction data, 3-4 conversion from three-dimensional colorimetric space data to the CMYK color reproduction data can be possible with the restraint of the set K plate amount.

The K plate substitution ratio used as the K plate restraint condition in the present invention is defined as a ratio between the total ink amount being a reference amount of the K plate amount for example the total ink amount of CMY (the basic ink gross weight) in the case of K =0 % and the total ink amount of CMYK in a K plate equivalent in color to the three-dimensional colorimetric space data (for example, XYZ value being the reference amount of K plate amount. In order to decide such a K plate substitution ratio, first, the color matching ink amount is calculated in each ink amount at ink amount space, then the total ink amount at each ink amount is obtained, and further a ratio between the total ink amount being a reference amount of the K plate amount under color condition (for examble, K=0%) and the total ink amount at each K plate amount, that is, the total ink amount ratio different from each K plate amount, may be obtained as the K plate substitution ratio. Moreover, it is preferred that in the present invention, the relation between the thus obtained K plate substitution ratio and the K plate amount is obtained as a function and is defined as a K plate substitution ratio function. The color matching is defined as described above.

The portion which is the most characterized portion of the present invention is to select a suitable parameter every an image in case of setting up the K plate restraint condition in order to attain the inverse mapping from three-dimensional colorimetric space to four-dimensional device space of CMYK.

That is, in the setting of the K plate restraint condition according to the present invention, first, after image analytical data was provided from the three-dimensional colorimetric space data, the thus obtained most suitable K plate control amount obtained with the experiment or the like previously, is selected as a parameter reflected to the K plate restraint condition based on the print stability for image analytical data, the selected each K place control amount is set as a most suitable value. The K plate control amount used for the present invention includes at least K plate substitution amount and K plate maximum limitation amount, and the color space weight such as chroma weight and/or brightness weight or the like may be included. The reflection to the K plate restraint condition of the K plate control amount is the weighting being the weighted coefficient of the K plate control amount, for example the weighted function group of the substitution strength weight function (INT acro) such as the K plate substitution amount and the K plate maximum limitation amount, the chroma weight function (Cacro) and the brightness weight function (Lacro). The other K plate control amount may be adopted.

The image analytical data used in the present invention includes at least the gray histogram (the gray component ratio), but the basic ink total amount (CMY ink amount) and the maximum brightness as well as the minimum brightness. Moreover, in the present invention, the relation between the image analytical data and most suitable K plate control amount must be obtained based on printability and stability (color difference fluctuation every the number of sheets and the locality in a respect are held down to a minimum) by previous experiment or the like. The relation between the image analytical data and most suitable K plate control amount is described later.

In the present invention, when the K plate substitution ratio is used as K plate restraint condition, the K plate control amount most suitable for as a parameter reflected to the image analytical data obtained from three-dimensional colorimetric data, is obtained, the weighting is performed to the K plate substitution ratio by using thus obtained most suitable K plate control amount, so that the K plate substitution ratio is obtained from the K plate control amount and the K plate substitution ratio function thus established as a K plate restraint condition for 3-4 conversion from three-dimensional color space (colorimetry data) to the four-dimensional color space (CMYK color reproduction data).

In this way, when the most suitable K plate restraint condition, for example, the K plate substitution ratio decided above can be set up based on the printability and stability, then, as shown in Fig. 9, in the present invention, the 3-3 inverse conversion from three-dimensional colorimetric space to three-dimensional color reproduction system of CMY is performed under the most suitable K plate restraint condition thus established, that is, first, the K plate amount is restricted, second, the 3-3 inverse conversion is performed for the K plate amount thus restricted, with the successive approximation method or the error minimization method, by using the forward normal lattice mapping function (for example, look up table) for performing forward conversion from the system for reproducing with four colors of CMYK to the three-dimensional colorimetric space.

Moreover, the ink amount of CMYK to be obtained must be present in effective reproduction area (color gamut of print). That is, this process must be performed in the effective reproduction area.

Moreover, as described above, the forward normal lattice mapping function, the three-dimensional colorimetric data and the four-dimensional color reproduction data are not limited in the present invention.

In this way, the printable K plate generating condition by taking printability and stability into consideration can be established automatically from the three-dimensional colorimetric data of subject image in the reproduction effective range without a user being conscious, so that it can obtain the four-dimensional color reproduction data (CMYK ink amounts) with color matching produced of four-colored (CMYK) balance, in order to suppress the color difference fluctuation every the number of sheets in print and the locality in the printing plane in a respect to minimum.

By the way, in the present invention, as described above, it is necessary to form the forward normal lattice mapping function (hereinafter, refer to as look up table : LUT) as a premise of performing 3-3 inverse conversion. As described above, this forward normal lattice mapping function can be formed as color prediction function and LUT. Moreover, the feature that the CMYK is obtained from XYZ by 3-4 inverse conversion is possible by using the inverse matrix solution with the above equation (1). However, as described above, it is impossible to obtain a close solution uniquely.

Therefore, as described above, it is considered that the K plate is restricted in some form, and under its K plate restraint condition, the above function is resolved by making the successive approximation and error maximum likelihood problem return to in the mapping from three-dimensional colorimetric value to the three-dimensional color reproduction data of CMY.

Specifically, for example, it can easily be resolved by the following method. In addition thereto, the colorimetric value is also expressed in CIEXYZ color system.

Ink amount of CMY color matched to one XYZ value calculatively is obtained discretely (for example, 10% notched) in the range of $0 < K \leq 100$ %. According to the K plate restraint condition such as the mixing ratio of the previously determined K plate, if the K plate is fixed in effective reproduction area of from maximum value of K (K =100) to minimum value of K (K=0), the amount of CMY accompanied therewith can be also obtained by interpolating he amount of CMY obtained with the amount of the discrete K plate with the reflection to the mixing ratio of K plate. In order to obtain the CMY from the XYZ as the inverse mapping of the forward normal lattice LUT, as shown by the equation (2) the error minimized problem such as Newton successive approximation method can easily be resolved with the approximate resolving method.

Next, the most characterized decision method of the K plate restraint condition according to the present invention is described.

In the first place, as described above, in the case of printing, the solution to the CMYK resolution condition to be colorimetric to color matching, exists infinitely. The object of objecting the unite resolution condition by restricting the amount of the K plate under the color reproduction characteristic inherent in printing, has mainly following points.

1) The color reproduction fluctuation in print is suppressed.
2) The total consumption of ink is suppressed to plan for cost down.
3) The reproduction of neutral color (achromatic color) is guaranteed. That is, the printed matter with stability, a low cost and high quality can be obtained by seeking the K plate amount restraint condition for meeting the above condition while maintaining the colorimetric reproduction.

In a place, the present inventor found through print experiments in the present invention that there is a strong correlation as the stability such as the fluctuation of color difference every the number of sheets and the locality in the printing plane in a respect between the analytical data value of an image and the setting value of K plate substitution ratio decision parameter group such as the amount of the K plate substitution which are mentioned as an amount of the K plate control (a condition) and the amount of color space weight such as the chroma weight, the brightness weight and the strength weight or the like such as the amount of maximum limitation. Then, the strong correlation is made in a function, and the K plate amount restraint condition is set up automatically, so that four color conversion can easily be performed, thereby attaining the above object.

First, Fig. 8 shows a relation between the amount of the K plate substitution and the amount of the CMY ink diagraphically. In the present invention, as shown in Fig. 8, the amount of the K plate substitution may be an amount of the colorimetric equivalent removal of CMY. However, strictly, as is frequently said so far, the amount of the colorimetric equivalent removal of CMY is not constant for the amount of the K plate substitution. As shown in Fig. 8, the substitution balance such as the amount of equivalent removal being equal to the amount of the K plate is generally not established. Therefore, in the present invention, the amount of the K plate is obtained from the K plate substitution ratio function formed by making the relation between the amount of K plate and the ratio of the K plate substitution in a function, with the use of the ratio of the K plate substitution defined by a ratio of the basic ink total amount and the total amount of CMYK due to the count of the color matching ink in the predetermined amount of the K plate, so that the amount of the accurate substitution, which was colorimetric and was alike in practical use, can be obtained.

In the second embodiment of the present invention, also, as in the same manner as the previous first embodiment, the amount of the K plate substitution, the amount of the K plate maximum limitation, the amount of color space or the like, such as the chroma weight, the brightness weight or the like, are used as the amount of the K plate control (the K plate generation restraint condition) having strong correlation with the image analytical data, but as long as the thing has a correlation to the image analytical data and can be reflected to the ratio of the achromatic ink substitution finally, any kind of amount and any kind of conditions may be used, and thus it can be set on a general-purpose.

For example, as an amount of the K plate control (the K plate generation restraint condition), for example, the amount of the K plate substitution, the weight, the amount of the K plate maximum limit and the brightness as shown in Figs. 5A, 5B, 5C and 5D can be used as one embodiment of the (Graphic User Interface) shown on the CRT can also be used, but the present invention is not limited thereto.

There is a strong correlation between the parameter group (amount of K plate control) for restricting such an amount of the K plate and the analytical data of the image for the above described stability. The ratio of gray ingredient in picture qualities is explained as analytic data of the image by a typical embodiment. As shown in Fig. 12, the ratio of gray element is taken discretely and is estimated by using two parameters of the median (the center place) and the half-width ($\delta$) designated by its envelope. The median of the gray histogram shows the deflection of color, and its half-width ($\delta$) shows some of an ingredient. For example, the gray histogram GA having a large half-width and wide foots shows various kinds of colors, and the sharp gray histogram GB having small half-width and narrow foots is not a color almost. Moreover, the method of deciding the ratio of the K plate substitution and generating four color separated CMYK plates utilizes the above described Newton successive approximation method.

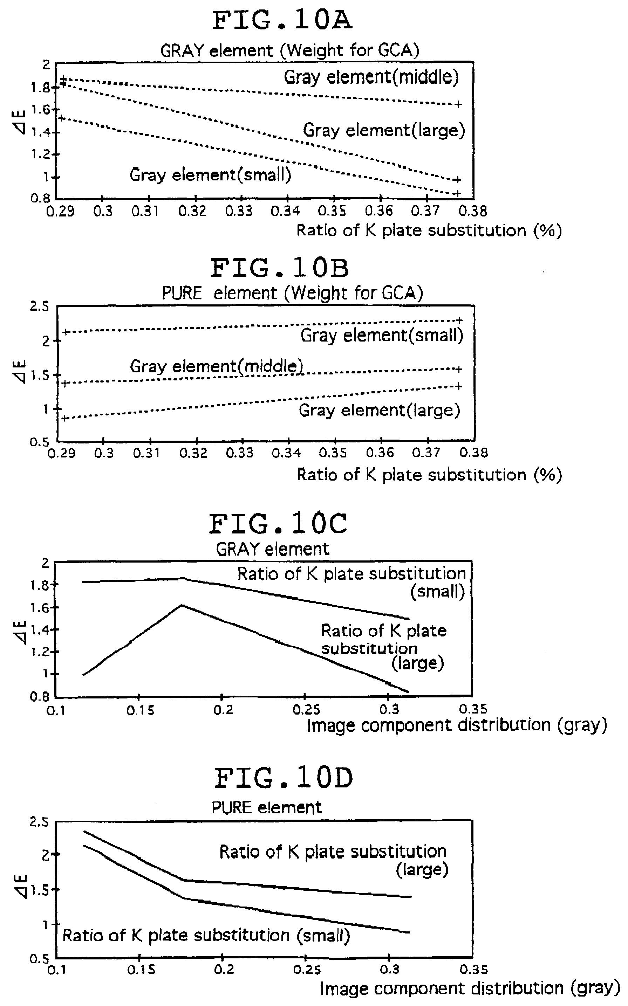

There is also a relation between stability in the print and the fluctuation by a place in one print sheet in accordance with the ratio of its K plate substitution, and thus relation has different correlation in accordance with a ratio of the gray in the image. This is different even in which color in picture have the qualities does it pay its attention to. This status is shown in Figs. 10A and 10B. As is seen from Figs. 10A and 10B, it is found that the correlation of the fluctuated color difference (ΔE) in print for the ratio of the K plate substitution described different curve by the ratio of gray ingredient in the image. Also, its correlation is different in the point that which color does it pay attention to. Therefore, it is found that the correlation of fluctuation in the print for the ratio of K plate substitution is also different by the ratio of the gray element in the graphic pattern. Figs. 10C and 10D are replotted for the correlation of fluctuation of print for the respective gray element against Figs. 10C and 10D. According to these Figures, the most suitable (most stable in print) ratio of the K plate substitution can be automatically selected from the table (or its functionalized equation) shown in Figs. 10C and 10D or (in the case of this embodiment, at least gray center or color center of other pure colors), by selecting which is the ratio of gray ingredient, or which is the ratio of gray ingredient of print image or which objet (a color) does it put an important point with in the image.

Herein, Figs. 10 A, 10B, 10C and 10D plot stability change (Lab color difference ΔE) in case of subjecting the ratio of the K plate to the strength change in chroma (the whole). Figs. 10A and 10B plot the stability change in case of taking the ratio of the K plate substitution as an abscissa. Figs. 10C and 10D plot the stability change for analysis result (gray element histogram) of the image. Figs. 10A and 10C plot the fluctuation as to gray (GRAY) patches. Figs. 10B and 10D plot the fluctuation as to other pure color batches (PURE).

It is found from Figs. 10A, 10B, 10C and 10D that if the ratio of K plate substitution is high, the gray color and the pure color are exchanged in stability, and if the ratio of gray element in the image is changed, the stability is exchanged even in the same ratio of the K plate substitution.

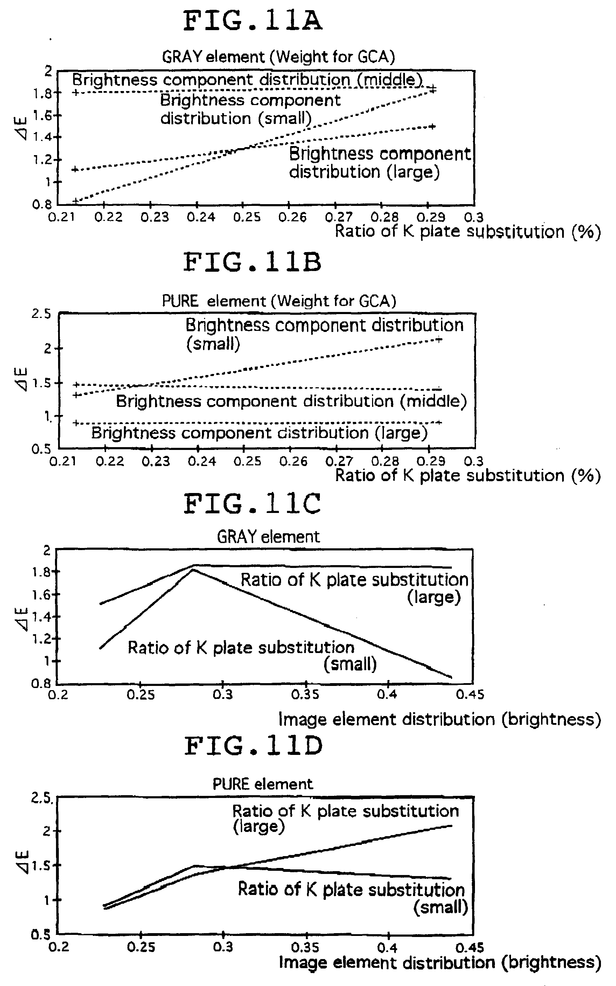

Moreover, Figs. 11A, 11B, 11C and 11D plot the stability (stability charge : Lab color difference ΔE) in case of subjecting the ratio of the K plate substitution to the strength change in lightness distribution in the same manner as in Figs. 10A, 10B, 10C and 10D. That is, Figs. 11A and 11B plot the stability change in case of taking the ratio of the K plate substitution as an abscissa. Figs. 11C and 11D plot the stability change for analysis result (gray element histogram) of the image. Figs. 11A and 11C plot the fluctuation as to gray patches (GRAY). Figs. 11B and 11D plot the fluctuation as to other pure color (PURE) batch.

It is found from Figs. 11A, 11B, 11C and 11D that if the ratio of K plate substitution is changed with brightness distribution, this change becomes large as the brightness distribution becomes small (narrow) .

As is seen from the above, according to the present invention, it is decided that which image color (gray or a pure color or other specified color) is paid attention to, from the image analytical data (the gray element, the histogram of brightness, the maximum density, the minimum density), so that the amount of most suitable K plate control and the condition (the amount of K plate substitution and the amount of K plate limitation (K plate substitution strength), the brightness weight and chroma weight (the amount of color space weight)) capable of being printed most stably, can be selected automatically. Therefore, the amount of the K plate substitution becoming the K plate restraint condition can be controlled from image analytical data.

By utilizing the thus selected K plate restraint condition, the four color separation data which were idenfinite solution from 3 dimensions to 4 dimensions can be obtained from three-dimensional colorimetric data as a solution orthogonalized of from 3 dimensions to 4 dimensions with successive approximation method and maximum likelihood approximation method. The obtained four color separation condition stores colorimetrically the original three-dimensional data so that the most stable reproducibility can be guarantee as to the object which wants to be paid attention to in the print.

As to the fluctuation in the print surface of the printed matter, the same data can be obtained so that the correlation table can be made. Therefore, even in the case that the picture paid attention to is the gradation and the picture in the screen tint in which the occupation rate for the print surface is very high and the frequency element is low, as the selected K plate restraint condition, a condition becoming minimum as to the fluctuation in the print surface may be selected.

Then, in the above description, as the K place restraint condition, the ratio of the K place substitution represented at the ratio of ink amount is used as the physical amount to describe the amount of K plate substitution, from a combination of the ink amount of color matching in Which each K plate is changed discretely for the colorimetric value of CMY (K =0), so that the amount of K plate substitution is obtained discretely and comprehensively, from the combination of CMY ink equivalent to metamerism by the amount of K plate substitution, thereby performing the mapping from XYZ to CMYK for the ratio of arbitrary K plate. As described above, when the colorimetric value of $C_0$, $M_0$, $Y_0$ (K = 0), is $X_0$, $Y_0$, $Z_0$, the count of color matching ink with K = N % is shown with $C_N$, $M_N$, $Y_N$. That is, the amount of k plate substitution can be defined by $R = f(C_N, M_N, Y_N, K_N) / f(C_0, M_0, Y_0)$, or the like. Here, f shows weighted mean and summation function or minimum function or the like.

When the thus obtained ratio of K plate substitution R is defined as a linear function of rate of K plate substitution in which the amount of K plate substitution $K_N$ is variable, the reproducible ink amounts of CMYK for the amount of arbitrary K plate substitution $K_N$ can be obtained. Generally, since the instable portion that color reproduction is near to impossibility in the print, is present in the color space, the ratio of K plate substitution R provided here may show a non-linear characteristic for a change of K plate amount. For example, when K plate amount increased, the ratio of K plate substitution (achromatic amount) exceed 1.0, and, it seems to reverse. In this case, it is thought that the phenomenon is not pleasing in the painting characteristic happens.

In case of generating the K plate, such a non-linearity on real print needs to be considered. That is, it is not guaranteed whether a result converted into can be reproduced on the print justly. Therefore, in the present invention, it is preferable to define the ratio of the K plate substitution function (correlation function with the amount of K plate substitution and the amount of K plate) only with linear portion, except for the non-linear portion, in which such a ratio of the K plate substitution (achromatic amount) is not linear for the amount of the K plate, that is, the non-linear portion that reproduction on the print is not guaranteed justly. Moreover, in the present invention, the correlation function with the ratio of K plate substitution and the amount of CMYK in the amount of color matching ink space that stated above may be approximated with polynominal, but this non-linear space needs to be avoided at this time. Concretely, the change of the K plate substitution ratio for increase of K plate amount in the arbitrary colorimetric value demanded is approximated with polynominal, and then, when inflection point on the differential calculus exists in the polynominal, the inspection may be done in such a way that a portion where the total ink amount is more than the inflection point takes off from the data.

Moreover, in the present invention, the restraint conditions such as the mapping function (polynominal) with the achromatic ink substitution ratio and CMYK ink amounts in the color matching ink amount space for lattice data of colorimetric space and the effective range (linear range) of the mapping function may be used as a profile for K plate generation (restraint condition). Therefore, as in the first embodiment of the present invention, the polynominal shown by the above equation (3) in which the K plate amount is approximated with K plate substitution ratio (achromatic amount) $R_{XYZ}$ at arbitrary colorimetric value as K plate substitution ratio (achromatic amount) function may be used in the second embodiment of the present invention. And, the coefficients of such the polynominal and the mapping function that is made in LUT are stored as the K plate generation profile so that the 3-4 conversion can be effected easily and effectively as in the first embodiment of the present invention. Also, in this embodiment data, outside gamut (color gamut of the print) which are necessary in case of performing the mapping from CIE colorimetry data to CMYK, can be obtained as the CMYK virtual amounts which continue geometrically for points within the color gamut.

As described in detail, according to the second embodiment of the present invention, by considering stability of color reproduction and security of precision on gray due to the equivalent K plate substitution equivalent to colorimetric color reproduction aimed to print by user, stabilization of the print by balance distribution of total ink amount, and expansion of the maximum density range, the K plate condition can be decided voluntarily with three-dimensional colorimetry data while maintaining colorimetric reproduction condition, and the most suitable parameters for every image can be selected in case of deciding the K plate condition. Particularly, when the inverse conversation is performed surely from the three-dimensional data such as the colorimetric values to the four color separation data CMYK in the print under the K plate generation condition selected voluntarily while maintaining colorimetric color matching, the K plate condition is automatically established on the basic of actual printability and stability on the interest image without the empirical skill of the use, and then four-dimensional color reproduction data separated four colors and simple and most suitable to the four colored print can be obtained.

The present invention describes the color reproduction data conversion method as to the above described embodiments in detail, but the present invention is not limited to these embodiments, and may be made various changes or modifications in design without departure from the gist of the invention.

## Claims

1. A color reproduction data converting method of converting three-dimensional colorimetric data into four-dimensional color reproduction data containing a black plate of C (cyan), M (magenta), Y (yellow) and K (black) while keeping a metamerism comprising the steps of:

   performing an inverse conversion from a three-dimensional colorimetric space to a three-dimensional CMY color space as to a plurality of different amounts of a K plate to obtain as color matching ink amounting ink amounts of CMY colors being metamer with the three-dimensional colorimetric data in case of an amount of the K plate being a reference amount as to the plurality of the different amounts of the K plate;
   obtaining a ratio between total ink amount of CMYK in each amount of the K plate and total ink amount of CMYK in case of the amount of the K plate being the reference amount as an achromatic amount in each amount of the K plate;

obtaining an achromatic amount function for said amount of the K plate in linear portion by examining a portion being non-linear in which said achromatic amount becomes non-linear for the amount of the K plate;

generating a mapping function from the three-dimensional colorimetric data and the achromatic amount to the ink amounts of CMYK in the linear portion and obtaining a K plate control condition as a weighting coefficient for reflecting the K plate control condition to the achromatic amount successively in order to perform a weighting to the achromatic amount with said K plate control condition previously selected ;

determining the achromatic amount from the achromatic amount function and the selected K plate control condition as a restraint condition for the inverse conversion from the three-dimensional colorimetric data to the four-dimensional color reproduction data; and

calculating ink amounts of CMYK from the thus determined achromatic amount and the three-dimensional colorimetric data with the use of said mapping function of the CMYK ink amount.

2. A color reproduction data converting method as claimed in claim 1, wherein said K plate control condition includes at least a K plate substitution amount, a maximum K place limitation, a chroma weight and a brightness weight.

3. A color reproduction data converting method as claimed in claim 1 or 2, wherein said inverse conversion from the three-dimensional colorimetric space to the three-dimensional CMY color space as to the plurality of the different amounts of the K plate is performed based on a forward conversion from a four-dimensional CMYK color space to the three-dimensional colorimetric space obtained with interpolation calculating by making colorimetry with specified color patches.

4. A color reproduction data converting method as claimed in any one of claims 1 to 3, wherein at least one of the CMYK ink amount mapping function and an achromatic amount limitation in the achromatic amount function performs a K plate generation by storing as a profile of K plate generation amount previously, and by making successive calling.

5. A color reproduction data converting method as claimed in any one of claims 1 to 4, wherein, when a point of a color gamut outside of a print requires for calculation of the ink amount of CMYK, the K plate outside the color gamut is estimated with maximum likelihood by using a parameter of the same dimension as the restraint condition used as calculation of said achromatic amount in such a way that the K plate outside the color gamut becomes continued from the K plate inside the color gamut, and then, if the thus assumed K plate is no less than 0 % and no more than 100 %, CMY ink amounts outside the color gamut are obtained by obtaining the color matching ink amounts in the assumed K plate, and if the assumed K plate is less than 0 % and more than 100 %, CMY ink imaginary amounts outside the color gamut continuing from inside the color gamut are estimated from a recurrence formula in a specified division space.

6. A color reproduction data converting method of converting three-dimensional colorimetric data into four-dimensional color reproduction data containing a black plate of C (cyan), M (magenta), Y (yellow) and K (black) while keeping metamerism comprising steps of:

setting up a restraint condition to a K plate, and

obtaining mapping of three-dimensional color reproduction data of CMY from the three-dimensional colorimetric data by using a forward normal lattice mapping function of three-dimensional colorimetric data from the four-dimensional color reproduction data of CMYK by the successive approximation or error minimization;

wherein a K plate control amount is included as a parameter reflected to said restraint condition of the K plate, and said K plate control amount is established in the most suitable value demanded by an experiment previously under print stability for image analytical data; and

wherein said K plate control amount contains a K plate substitution amount and a K plate amount of maximum limitation at least, and image analytical data contains gray histogram at least.

7. A color reproduction data converting method as claimed in claim 6, wherein said K plate control amount includes further at least one of chroma weight and a brightness weight.

8. A color reproduction data converting method as claimed in claim 6 or 7, wherein said image analytical data includes a basic ink gross amount of CMY, a maximum brightness and a minimum brightness.

9. A color reproduction data converting method as claimed in any one of claim 6 to 8, wherein said forward normal lattice mapping function is obtained by subjecting specified color patches to colorimetry and by making forward conversion obtained with interpolation calculating from four-dimensional CMYK color space to three-dimensional colorimetric space.

10. A color reproduction data converting method as claimed in any one of claims 6 to 9, wherein said K plate restraint condition is a K plate substitution ratio at each amount of the K plate which is defined as a ratio between a total amount of CMYK in each amount of the K plate and a total amount of CMKY in case of the amount of the K plate being the reference amount, and wherein said K plate substitution ratio at each amount of the K plate is obtained by making inverse conversion from a three-dimensional colorimetric space to a three-dimensional CMY color space as to a plurality of different amounts of the K plate including the reference amount with the use of the forward normal lattice mapping function to obtain ink amounts of CMY colors being metamer with the three-dimensional colorimetric data increase of the amount of the K plate being the reference amount as to the plurality of the different amounts of the K plate, thereby obtaining the ratio between the total amounts of CMYK in each amount of the K plate thus obtained and in case of the amount of the K plate being the reference amount.

11. A color reproduction data converting method as claimed in claim 10, wherein

said K plate substitution ratio is defined as the K plate substitution ratio function being a variable of the amount of the K plate in a effective reproduction area, and said K plate control amount is obtained as a weighting coefficient reflected to successive K plate substitution ratio in order to perform a weighting to the K plate substitution ratio, wherein
said setting of the K plate restraint condition is subjected in such a way that the most suitable K plate control amount is obtained as a parameter reflected to the K plate restraint condition for the image analytical data obtained from the three-dimensional colorimetric data, the K plate substitution ratio is weighted as the weighting coefficient with the most suitable K plate control amount thus obtained, and the K plate substitution ratio is decided from the thus set K plate control amount and the K plate substitution ratio function, and wherein finally the ink amounts of CMYK are calculated as the four-dimensional color reproduction data.

# FIG.1

```
          ┌──────────┐
          │  Start   │
          └────┬─────┘
               ↓
   ┌─────────────────────────────────────────┐
   │ Calculation of amount of color matching ink │
   └────────────────┬────────────────────────┘
                    ↓
   ┌──────────────────────────────────┐
   │ Calculation of achromatic amount │
   └────────────────┬─────────────────┘
                    ↓
   ┌──────────────────────────────────────┐
   │ Decision of achromatic amount function │
   └────────────────┬───────────────────────┘
                    ↓
   ┌───────────────────────────────────────────────┐
   │ Generation of mapping function of CMYK ink amount │
   └────────────────┬──────────────────────────────┘
                    ↓
   ┌───────────────────────────────────────────────┐
   │ Decision of weighting coefficient to achromatic │
   │ amount under K plate control condition          │
   └────────────────┬──────────────────────────────┘
                    ↓
   ┌───────────────────────────────────────────────┐
   │ Selection of K plate control condition by user  │
   └────────────────┬──────────────────────────────┘
                    ↓
   ┌───────────────────────────────────────────────┐
   │ Decision of achromatic amount from selected K plate │
   │ control condition and achromatic amount function    │
   └────────────────┬──────────────────────────────┘
                    ↓
   ┌───────────────────────────────────────────────────────┐
   │ Calculation of amounts of CMYK ink from decided achromatic │
   │ amount and colorimetric value by CMYK ink amount mapping function │
   └────────────────┬──────────────────────────────────────┘
                    ↓
          ┌──────────┐
          │   End    │
          └──────────┘
```

# FIG.2

Colorimetric space

Ink amount space CMYK

| Colorimetric value |

Inverse conversion system
XYZ ⟶ CMY

Forward conversion system
CMYK ⟶ XYZ

Ink amount CMY(K=0)

Ink amount CMY(K=10)

Ink amount CMY(K=20)

．
．
．

Ink amount CMY(K=N)

Calculation of color matching ink amount having differrent amounts of K plate with same colorimetric value

Decision of achromatic amount by obtaining ratio of ink amount with each K=N% based on CMY ink amounts of K=0

EP 0 843 463 A2

# FIG.3A

Chart with y-axis "CMY ink amounts (%)" from 0 to 100, x-axis "Amount of K plate(%)" from 0 to 100. Curves labeled C, M, Y.

# FIG.3B

Chart with y-axis "Achromatic amount" from 0 to 1, x-axis "Amount of K plate(%)" from 0 to 100.

# FIG.4A

# FIG.4B

# FIG.5A

C M Y → C M Y K

ink amount

# FIG.5B

b*

a*

# FIG.5C

Amount of K plate

L* Brightness

# FIG.5D

Amount of K plate

L* Brightness

# FIG.6

Probability strength   $\phi t$

$\phi (Ch^*)$

O

Ch*

# FIG.7

L*   Dotted line: with K plate
Solid line: without K plate

# FIG.8

M
Y
C

M
Y
C
K

# FIG.9

Colorimetric space data

Weighting function group
· Cacro Chroma
· Lacro Brightness
· INTacro Strength

CMYK → Colorimetric value
Mapping function(LUT)

Setting of K plate restraint condition

Inverse conversion by successive approximation method under K plate restriction

CMY ink amounts

# FIG.12

## FIG.10A

GRAY element (Weight for GCA)

Gray element(middle)

Gray element(large)

Gray element(small)

Ratio of K plate substitution (%)

## FIG.10B

PURE element (Weight for GCA)

Gray element(small)

Gray element(middle)

Gray element(large)

Ratio of K plate substitution (%)

## FIG.10C

GRAY element

Ratio of K plate substitution (small)

Ratio of K plate substitution (large)

Image component distribution (gray)

## FIG.10D

PURE element

Ratio of K plate substitution (large)

Ratio of K plate substitution (small)

Image component distribution (gray)

# FIG.11A

GRAY element (Weight for GCA)

# FIG.11B

PURE element (Weight for GCA)

# FIG.11C

GRAY element

# FIG.11D

PURE element